## Europäisches Patentamt

## European Patent Office

## Office européen des brevets

(11) Publication number: **0 113 224**
**B1**

(12) **EUROPEAN PATENT SPECIFICATION**

(45) Date of publication of patent specification: **25.03.87**

(21) Application number: **83307722.5**

(22) Date of filing: **19.12.83**

(51) Int. Cl.⁴: **G 11 B 5/027, H 03 F 3/347**

(54) **Signal translating circuits.**

(30) Priority: **30.12.82 JP 234248/82**

(43) Date of publication of application:
**11.07.84 Bulletin 84/28**

(45) Publication of the grant of the patent:
**25.03.87 Bulletin 87/13**

(84) Designated Contracting States:
**DE FR GB NL**

(56) References cited:
**US-A-3 651 347**
**US-A-4 354 122**

**Handbuch für Hochfrequenz- und Elektro-
Techniker; Band 5-1981; Rint Curt; ISBN 3-
7785-0682-X; pages 451 and 459**

(73) Proprietor: **SONY CORPORATION**
**7-35 Kitashinagawa 6-Chome Shinagawa-ku
Tokyo 141 (JP)**

(72) Inventor: **Akutagawa, Tooru c/o Patent Division
Sony Corporation 7-35 Kitashinagawa-6
Shinagawa-ku Tokyo (JP)**
Inventor: **Machida, Yukihiko c/o Patent Division
Sony Corporation 7-35 Kitashinagawa-6
Shinagawa-ku Tokyo (JP)**

(74) Representative: **Thomas, Christopher Hugo
et al
D Young & Co 10 Staple Inn
London WC1V 7RD (GB)**

Courier Press, Leamington Spa, England.

## Description

This invention relates to signal translating circuits. Such circuits are, for example, suitable for use in a recording amplifier provided for recording a video signal in a video tape recorder of the helical scanning type.

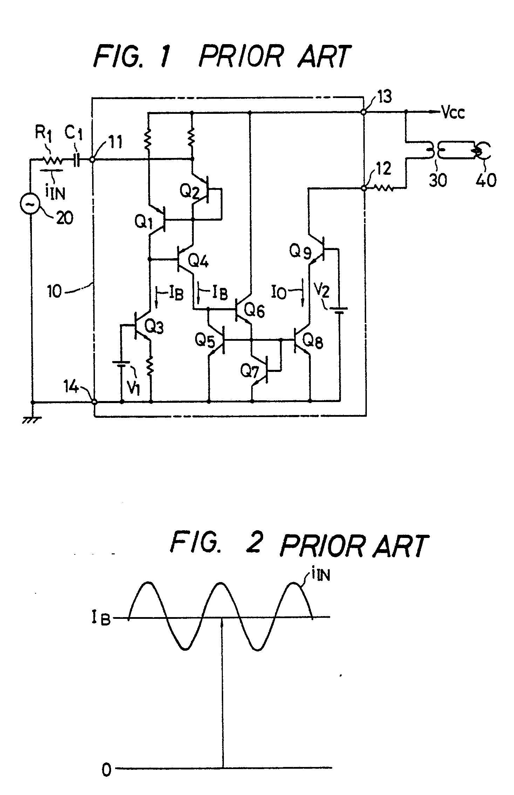

There has been previously proposed a circuit as shown in Figure 1 of the accompanying drawings for forming a recording amplifier used for recording a video signal in a video tape recorder of the helical scanning type. The circuit of Figure 1 contains therein a signal translating circuit performing voltage to current conversion, a major part of which is formed into an integrated circuit 10 comprising transistors $Q_1$ to $Q_9$ which are arranged on a common semiconductor substrate. In the integrated circuit 10, the transistors $Q_1$ and $Q_2$ form an input current mirror circuit portion which is supplied with a DC biasing current $I_B$ flowing therethrough by the transistor $Q_3$ having its base supplied with a DC voltage $V_1$. The transistors $Q_5$ to $Q_8$ form an output current mirror circuit portion, and the transistor $Q_9$ forms an output stage. The emitter of each of the transistors $Q_8$ and $Q_9$ is designed to be approximately fifty times as large in area as that of each of the transistors $Q_1$ to $Q_7$. An input terminal 11 is provided at the emitter of the transistor $Q_2$ which is connected to act as a diode, and an output terminal 12 is provided at the collector of the transistor $Q_9$. A power supply terminal 13 and a ground terminal 14 are also provided. External to the integrated circuit 10, a source 20 of a video signal which is to be recorded is connected through a resistor $R_1$ and a capacitor $C_1$ to the input terminal 11, and a primary winding of a rotary transformer 30 is connected between the output terminal 12 and the power supply terminal 13. A secondary winding of the rotary transformer 30 is coupled with a coil of a magnetic head 40.

In the recording amplifier so formed, the resistance value in the forward direction of the transistor $Q_2$ connected to act as a diode and forming the input current mirror circuit portion varies in response to a current flowing therethrough, and consequently an input signal current $i_{IN}$ suffers from second harmonic distortion.

Generally, in the magnetic recording of a video signal, it is required to suppress second harmonic distortion of a recording current to be less than minus forty decibels. To achieve this degree of suppression of the second harmonic distortion of the input signal current $i_{IN}$ with the recording amplifier shown in Figure 1, it is necessary to cause the DC biasing current $I_B$ flowing through the input current mirror circuit portion to have a value more than twice as large as the peak-to-peak value of the input signal current $i_{IN}$, as shown in Figure 2 of the accompanying drawings. In the case where the DC biasing current $I_B$ has such a large value, since the transistor $Q_4$ is connected directly to the output current mirror circuit portion formed by the transistors $Q_5$ to $Q_8$ to supply the DC biasing current $I_B$ to the current mirror circuit portion, an output DC current $I_o$ flowing through the transistor $Q_9$ forming the output stage is also caused to have a value more than twice as large as the peak-to-peak value of an output signal current. This results in the disadvantage that the power consumption is undesirably increased.

Moreover, in the recording amplifier shown in Figure 1, since both the DC biasing current $I_B$ and the output DC current $I_o$ are determined within the integrated circuit 10, the value of each of the DC biasing current $I_B$ and the output DC current $I_o$ varies in response to variations in temperature in the integrated circuit 10, and it is very hard to compensate completely the DC biasing current $I_B$ and the output DC current $I_o$ for variations in value by utilizing resistors provided in the integrated circuit 10, or the base-emitter voltage of a transistor provided in the integrated circuit 10. This results in the defect that an output recording current varies in response to temperature variations in the integrated circuit 10. The fact that the output recording current is determined within the integrated circuit 10 also causes a further disadvantage that respective output recording currents are lacking in uniformity in the case where a plurality of recording amplifiers of the above mentioned type and each comprising the integrated circuit 10 are provided.

Handbuch für Hochfrequenz- und Elektro-Techniker, Band 5-1981; Rint, Curt, pp 451 and 459 discloses a voltage controlled current source which can be used to convert an input voltage into a current.

According to the present invention there is provided a signal translating circuit comprising:

an integrated circuit including:

first and second transistors connected to each other in such a manner that a collector of said first transistor is coupled to a base of said second transistor and an emitter of said second transistor is coupled to a base of said first transistor so as to form a negative feedback arrangement;

a first current source connected to the emitter of said second transistor for supplying a first current to flow through the emitter of said second transistor;

a second current source connected to a collector of said second transistor for supplying a second current identical with the first current to the collector of said second transistor; and

means for deriving the output current signal from the collector of said second transistor;

an input resistor connected between the base of said first transistor and a source of an input voltage signal for converting the input voltage signal into an input current signal to be supplied to the base of said first transistor; and a bias current source external to said integrated circuit for supplying an additional bias current for the output of said second transistor to compensate for temperature variations of said integrated circuit.

In embodiments of signal translating circuit according to the invention, the input current signal can be made almost free from the problem of distortion over the whole range in which the second transistor is in the active state, and therefore a DC biasing current flowing through the second transistor can be reduced to a value corresponding to a half of the peak-to-peak value of the input current signal. As a result, the power consumption in the circuit can be considerably reduced. Moreover, both DC and AC components of the output current signal are determined substantially externally of the integrated circuit, and an output current signal which is not substantially affected by temperaure variations of the integrated circuit can be obtained.

The invention will now be described by way of example with reference to the accompanying drawings, throughout which like parts are referred to by like references, and in which:

Figure 1 is a circuit diagram showing a previously proposed signal translating circuit used in a recording amplifier;

Figure 2 is a waveform diagram used for explaining a DC biasing current in the circuit shown in Figure 1;

Figure 3 is a circuit diagram showing an embodiment of signal translating circuit according to the invention, which is used in a recording amplifier; and

Figure 4 is a waveform diagram used for explaining a DC biasing current in the embodiments of Figure 3.

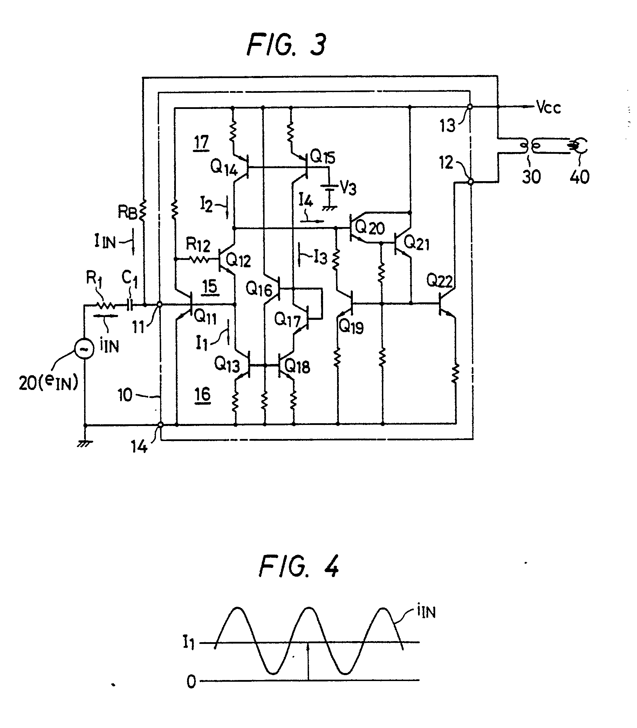

Figure 3 shows an embodiment of signal translating circuit according to the invention which performs voltage to current conversion and is used as a recording amplifier for recording a video signal in a video tape recorder of the helical scanning type.

In this embodiment, a major part of the circuit is formed into the integrated circuit 10 which comprises transistors $Q_{11}$ to $Q_{22}$ arranged on a common semiconductor substrate. The transistors $Q_{11}$ and $Q_{12}$ are connected to each other in such a manner that the collector of the transistor $Q_{11}$ is coupled through a resistor $R_{12}$ provided for preventing oscillation to the base of the transistor $Q_{12}$, and the emitter of the transistor $Q_{12}$ is coupled with the base of the transistor $Q_{11}$, so as to form a negative feedback circuit 15. The transistor $Q_{13}$ connected to the emitter of the transistor $Q_{12}$ forms a first constant current source 16. The transistors $Q_{13}$ and $Q_{16}$ to $Q_{18}$ inclusive form a current mirror circuit connected to a third constant current source formed by the transistor $Q_{15}$. The transistors $Q_{19}$ to $Q_{22}$ inclusive form a current mirror amplifying circuit, and the transistor $Q_{22}$ individually forms an output stage. The emitter of the transistor $Q_{22}$ is designed to be approximately fifty times as large in area as that of each of the transistors $Q_{11}$ to $Q_{21}$. The input terminal 11 is connected to the base of the transistor $Q_{11}$, which is a feedback point in the negative feedback circuit 15, and the output terminal 12 is connected to the collector of the transistor $Q_{22}$. External to the integrated circuit 10,

a biasing resistor $R_B$ is connected between the input terminal 11 and the power supply terminal 13. The source 20 of the video signal (input voltage signal $e_{IN}$) which is to be recorded is connected through the resistor $R_1$ and the capacitor $C_1$ to the input terminal 11, and the rotary transformer 30 to which the magnetic head 40 is coupled is connected between the output terminal 12 and the power supply terminal 13.

In this signal translating circuit, the input voltage signal $e_{IN}$ from the source 20 is supplied to the resistor $R_1$ to be converted thereby into the input current signal $i_{IN}$, and the input current signal $i_{IN}$ thus obtained is supplied to the input terminal 11. The transistor $Q_{14}$, which forms the second constant current source, is maintained in the active state in consequence of being supplied with a voltage $V_3$ to the base thereof, and supplies a constant current $I_2$ therefrom. The transistor $Q_{15}$, which forms the third constant current source, is also maintained in the active state in consequence of being supplied with the voltage $V_3$ to the base thereof and supplies a constant current $I_3$ flowing therethrough into the current mirror circuit formed by the transistors $Q_{13}$ and $Q_{16}$ to $Q_{18}$. In the current mirror circuit formed by the transistors $Q_{13}$ and $Q_{16}$ to $Q_{18}$, a constant current $I_1$ flows through the transistor $Q_{13}$ in response to the constant current $I_3$ flowing through the transistors $Q_{17}$ and $Q_{18}$ due to the current mirror operation therein. The constant current $I_2$ of the second constant current source 17 and the constant current $I_3$ of the third current source are determined to be equal to each other and the constant current $I_1$ of the first constant current source 16 and the constant current $I_3$ are also determined to be equal to each other, so that the constant current $I_1$ is equal to the constant current $I_2$.

When the signal translating circuit operates in such a manner, an output current signal, which is obtained in response to the input current signal $i_{IN}$ supplied to the negative feedback circuit 15, is supplied to the current mirror amplifying circuit formed by the transistors $Q_{19}$ to $Q_{22}$ inclusive from the collector of the transistor $Q_{12}$, and an amplified output current signal is supplied to the rotary transformer 30 through the transistor $Q_{22}$ which forms the output stage. As a result of this, a recording current flows through the magnetic head 40 in response to the amplified output current signal supplied to the rotary transformer 30.

In this signal translating circuit, since the input terminal 11, to which the input current signal $i_{IN}$ is supplied, is provided at the base of the transistor $Q_{11}$ forming the feedback point in the negative feedback circuit 15 formed by the transistors $Q_{11}$ and $Q_{12}$, and consequently the potential of the input terminal 11 is maintained constant, the input impedance at the input terminal 11 viewed from the source 20 becomes substantially zero. Accordingly, the input current signal $i_{IN}$ depends upon only the input voltage signal $e_{IN}$ from the source 20 and the resistor $R_1$, and the following equation is satisfied:

$$i_{IN} = \frac{e_{IN}}{R_1} \qquad (1)$$

wherein $i_{IN}$, $e_{IN}$ and $R_1$ stand for the current value of the input current value of the input current signal $i_{IN}$, the voltage value of the input voltage signal $e_{IN}$ and the resistance value of the resistor $R_1$. This means that the input current signal $i_{IN}$ is almost free from the problem of distortions therein over the whole range wherein the transistor $Q_{12}$ is maintained in the active state, and therefore a DC biasing current to the transistor $Q_{12}$, which is the constant current $I_1$, can be reduced to a value corresponding to a half of the peak-to-peak value of the input current signal $i_{IN}$, as shown in Figure 4.

Moreover, in this signal translating circuit, since the output current signal is derived from the collector of the transistor $Q_{12}$, the difference between the constant current $I_2$ of the second constant current source 17 and a DC current $I_4$ contained in the output current signal is equal to the difference between the constant current $I_1$ of the first constant current source 16 and a DC biasing current $I_{IN}$ supplied through the biasing resistor $R_B$ provided externally of the integrated circuit 10, that is, the equation:

$$I_2 - I_4 = I_1 - I_{IN} \qquad (2)$$

is satisfied. Since the constant current $I_1$ is equal to the constant current $I_2$, as aforementioned, the DC current $I_4$ contained in the output current signal is equal to the DC biasing current $I_{IN}$ flowing through the biasing resistor $R_B$, and assuming that a power source voltage $V_{CC}$ is supplied to the power supply terminal 13, and a base-emitted voltage $V_{BE}$ is obtained between the base and emitter of the transistor $Q_{11}$, the following equation is satisfied:

$$I_4 = I_{IN} = \frac{V_{CC} - V_{BE}}{R_B} \qquad (3)$$

where $R_B$ stands for the resistance value of the biasing resistor $R_B$. Accordingly, the DC current contained in the output current signal is substantially determined by the arrangement external to the integrated circuit 10. In one specific example, $I_1$ and $I_2$ are selected to be 300 microamps, $I_{IN}$ and $I_4$ are selected to be 500 microamps and a DC current flowing through the transistor $Q_{22}$ is selected to be 40 milliamps.

As described above, with the embodiment which performs voltage to current conversion, the DC biasing current can be reduced to a value corresponding to the peak value of the input current signal and, as a result, the power consumption can be considerably reduced. Moreover, the output current signal which is determined in accordance with the arrangement provided externally of the integrated circuit and is not substantially affected by temperature variations in the integrated circuit is derived, and therefore a stable recording current based on such a output current signal can be obtained in the case where the circuit is used as a recording amplifier in a video tape recorder.

**Claims**

1. A signal translating circuit comprising:
an integrated circuit (10) including:
first and second transistors ($Q_{11}$, $Q_{12}$) connected to each other in such a manner that a collector of said first transistor ($Q_{11}$) is coupled to a base of said second transistor ($Q_{12}$) and an emitter of said second transistor ($Q_{12}$) is coupled to a base of said first transistor ($Q_{11}$) so as to form a negative feedback arrangement;
a first current source (16) connected to the emitter of said second transistor ($Q_{12}$) for supplying a first current to flow through the emitter of said second transistor ($Q_{12}$);
a second current source (17) connected to a collector of said second transistor ($Q_{12}$) for supplying a second current identical with the first current to the collector of said second transistor ($Q_{12}$); and
means ($Q_{19}$ to $Q_{22}$) for deriving the output current signal from the collector of said second transistor ($Q_{12}$);
an input resistor ($R_1$) connected between the base of said first transistor ($Q_{11}$) and a source (20) of an input voltage signal for converting the input voltage signal into an input current signal to be supplied to the base of said first transistor ($Q_{11}$); and
a bias current source ($R_B$) external to said integrated circuit (10) for supplying an additional bias current for the output of said second transistor ($Q_{12}$) to compensate for temperature variations of said integrated circuit (10).

2. A signal translating circuit according to claim 1 wherein said bias current source ($R_B$) is connected to the base of said first transistor ($Q_{11}$).

3. A signal translating circuit according to claim 2 wherein said source (20) of the input voltage signal is AC-coupled to the base of said first transistor ($Q_{11}$).

4. A signal translating circuit according to claim 2 wherein said bias current source ($R_B$) comprises a resistor ($R_B$) connected between the base of said first transistor ($Q_{11}$) and a power supply terminal (13).

5. A signal translating circuit according to claim 2 wherein said first current supplied by said first current source (16) is selected to be substantially equal to a half of the peak-to-peak value of the input current signal.

6. A signal translating circuit according to claim 1 wherein said means ($Q_{19}$ to $Q_{22}$) for deriving the output current signal comprises a current mirror amplifying circuit ($Q_{19}$ to $Q_{22}$) having an input terminal connected to the collector of said second transistor ($Q_{12}$) and an output terminal (12) connected to a load (30, 40).

7. A signal translating circuit according to claim 1 further comprising a third current source ($Q_{15}$) for controlling said first current source (16).

**Patentansprüche**

1. Signalumwandlungsschaltung mit einer integrierten Schaltung (10), die

— einen ersten und einen zweiten Transistor ($Q_{11}$, $Q_{12}$), welche miteinander in der Weise verbunden sind, daß ein Kollektor des ersten Transistors ($Q_{11}$) mit einer Basis des zweiten Transistors ($Q_{12}$) und ein Emitter des zweiten Transistors ($Q_{12}$) mit einer Basis des ersten Transistors ($Q_{11}$) verbunden ist, um auf diese Weise eine negative Rückkopplungsanordnung zu bilden,

— eine erste Stromquelle (16), die mit dem Emitter des zweiten Transistors ($Q_{12}$) zum Zuführen eines ersten Stroms verbunden ist, der durch den Emitter des zweiten Transistors ($Q_{12}$) fließen soll,

— eine zweite Stromquelle (17), die mit einem Kollektor des zweiten Transistors ($Q_{12}$) zum Zuführen eines zweiten Stroms, der mit dem ersten Strom identisch ist, zu dem Kollektor des zweiten Transistors ($Q_{12}$), und

— Mittel ($Q_{19}$, . . ., $Q_{22}$) zum Gewinnen des Ausgangsstromsignals von dem Kollektor des zweiten Transistors ($Q_{12}$) enthält,

einem Eingangswiderstand ($R_1$), der zwischen die Basis des ersten Transistors ($Q_{11}$) und eine Quelle (20) eines Eingangsspannungssignals zum Umwandeln des Eingangsspannungssignals in ein Eingangsstromsignal, das an die Basis des ersten Transistors ($Q_{11}$) zu führen ist, geschaltet ist, sowie

einer Vorstromquelle ($R_B$), die außerhalb der integrierten Schaltung (10) liegt, zum zusätzlichen Zuführen eines Vorstroms für das Ausgangssignal des zweiten Transistors ($Q_{12}$), um temperaturbedingte Änderungen des Verhaltens der integrierten Schaltung (10) zu kompensieren.

2. Signalumwandlungsschaltung nach Anspruch 1, bei der die Vorstromquelle ($R_B$) mit der Basis des ersten Transistors ($Q_{11}$) verbunden ist.

3. Signalumwandlungsschaltung nach Anspruch 2, bei der die Quelle (20) des Eingangsspannungssignals mit der Basis des ersten Transistors ($Q_{11}$) wechselstromgekoppelt ist.

4. Signalumwandlungsschaltung nach Anspruch 2, bei der die Vorstromquelle ($R_B$) aus einem Widerstand ($R_B$) besteht, der zwischen die Basis des ersten Transistors ($Q_{11}$) und eine Stromversorgungsklemme (13) geschaltet ist.

5. Signalumwandlungsschaltung nach Anspruch 2, bei der der erste Strom, der durch die erste Stromquelle (16) zugeführt wird, so gewählt ist, daß er im wesentlichen gleich der Hälfte des Spitze-zu-Spitze-Werts des Eingangsstromsignals ist.

6. Signalumwandlungsschaltung nach Anspruch 1, bei der die Mittel ($Q_{19}$, . . ., $Q_{22}$) zum Gewinnen des Ausgangsstromsignals aus einer Stromspiegelschaltung ($Q_{19}$, . . ., $Q_{22}$) bestehen, die eine Eingangsklemme, welche mit dem Kollektor des zweiten Transistors ($Q_{12}$) verbunden ist, und eine Ausgangsklemme (12) hat, die mit einer Last (30, 40) verbunden ist.

7. Signalumwandlungsschaltung nach Anspruch 1, die desweiteren eine dritte Stromquelle ($Q_{15}$) zum Regeln der ersten Stromquelle (16) enthält.

**Revendications**

1. Circuit de transformation de signaux, comprenant:
un circuit intégré (10) qui comprend:
un premier et un second transistor ($Q_{11}$, $Q_{12}$) reliés l'un à l'autre de manière qu'un collecteur du premier transistor ($Q_{11}$) soit couplé à une base du second transistor ($Q_{12}$) et un émetteur du second transistor ($Q_{12}$) soit relié à une base du premier transistor ($Q_{11}$) afin qu'un arrangement à réaction négative soit formé,
une première source de courant (16) reliée à l'émetteur du second transistor ($Q_{12}$) afin qu'elle transmette un premier courant qui circule dans l'émetteur du second transistor ($Q_{12}$),
une seconde source de courant (17) reliée à un collecteur du second transistor ($Q_{12}$) afin qu'elle transmette un second courant identique au premier courant, au collecteur du second transistor ($Q_{12}$), et
un dispositif ($Q_{19}$ à $Q_{22}$) destiné à dériver un signal de sortie sous forme d'un courant à partir du collecteur du second transistor ($Q_{12}$),
une résistance d'entrée ($R_1$) montée entre la base du premier transistor ($Q_{11}$) et une source (20) d'un signal d'entrée sous forme d'une tension afin que le signal d'entrée forme d'une tension soit transformé en un signal d'entrée sous forme d'un courant destiné à être transmis à la base du premier transistor ($Q_{11}$), et
une source ($R_B$) d'un courant de polarisation, placée à l'extérieur du circuit intégré (10) et destinée à transmettre un courant supplémentaire de polarisation afin que le signal de sortie du second transistor ($Q_{12}$) compense les variations de température du circuit intégré (10).

2. Circuit de transformation de signaux selon la revendication 1, dans lequel la source d'un courant de polarisation ($R_B$) est reliée à la base du premier transistor ($Q_{11}$).

3. Circuit de transformation de signaux selon la revendication 2, dans lequel la source (20) du signal d'entrée sous forme d'une tension est couplée en courant alternatif à la base du premier transistor ($Q_{11}$).

4. Circuit de transformation de signaux selon la revendication 2, dans lequel la source de courant de polarisation ($R_B$) comporte une résistance ($R_B$) montée entre la base du premier transistor ($Q_{11}$) et une borne (13) d'alimentation en énergie.

5. Circuit de transformation de signaux selon la revendication 2, dans lequel le premier courant transmis par la première source de courant (16) est choisi de manière qu'il soit sensiblement égal à la moitié de la valeur entre crête du signal d'entrée sous forme d'un courant.

6. Circuit de transformation de signaux selon la revendication 1, dans lequel le dispositif ($Q_{19}$ à $Q_{22}$) destiné à dériver le signal de sortie sous forme d'un courant comporte un circuit amplificateur de miroir de courant ($Q_{19}$ à $Q_{22}$) ayant une borne d'entrée reliée au collecteur du second transistor ($Q_{12}$) et une borne de sortie (12) reliée à une charge (30, 40).

7. Circuit de transformation de signaux selon la revendication 1, comprenant en outre une troisième source de courant ($Q_{15}$) destinée à commander la première source de courant (16).

## FIG. 1  PRIOR ART

## FIG. 2  PRIOR ART

1

## FIG. 3

## FIG. 4